# EUROPÄISCHE PATENTSCHRIFT

(11) **EP 0 725 991 B1**
(45) Veröffentlichungstag und Bekanntmachung des Hinweises auf die Patenterteilung: **02.04.1997**
(21) Anmeldenummer: 94930932.2
(22) Anmeldetag: 18.10.1994
(51) Int. Cl.: H02B 13/035

(54) **LEITERVERBINDUNG**
CONDUCTOR CONNECTION
CONNEXION DE FILS CONDUCTEURS

(30) Priorität: 29.10.1993 DE 9316832 U
(43) Veröffentlichungstag der Anmeldung: 14.08.1996
(73) Patentinhaber: SIEMENS AKTIENGESELLSCHAFT, 80333 München (DE)
(72) Erfinder: KIEPER, Mario, D-14612 Falkensee (DE)
(86) Internationale Anmeldenummer: DE9401260
(87) Internationale Veröffentlichungsnummer: WO9512233

(56) Entgegenhaltungen:
- EP-A- 0 348 313
- DE-A- 1 465 835
- DE-U- 9 316 832
- FR-A- 2 295 433

## Beschreibung

Die Erfindung bezieht sich auf eine Leiterverbindung für die Endstücke zweier zylindrischer, an ihren zu verbindenden Enden kuppelförmig abgerundeter Hochspannungsleiter, insbesondere Sammelschienenleiter einer gekapselten Hochspannungsschaltanlage, die radial gegeneinander versetzt sind und die in axialer Richtung überlappen.

Eine derartige Leiterverbindung ist beispielsweise innerhalb einer metallgekapselten Hochspannungsschaltanlage an solchen Stellen notwendig, an denen die Sammelschienenleiterführung ein seitliches Verspringen der Sammelschienenleiter, d. h. eine Kröpfung notwendig macht. Dieses Problem tritt insbesondere dann auf, wenn ein Übergang zwischen einem ersten Kapselungsgehäuse mit drei im Querschnitt in Form eines gleichseitigen Dreiecks angeordneten Sammelschienenleitern auf ein zweites Kapselungsgehäuse mit drei ebenfalls im Querschnitt in Form eines gleichseitigen Dreiecks angeordneten Leitern geschaffen werden muß, wobei der Abstand der Leiter untereinander innerhalb des ersten Kapselungsgehauses anders ist als innerhalb des zweiten Kapselungsgehauses. Dieser Fall kann beispielsweise auftreten, wenn Teile einer ersten Schaltanlage mit Teilen einer zweiten Schaltanlage anderer Bauart verbunden werden sollen.

Aus der EP-A-0 348 313 ist eine Leiterverbindung für die Endstücke zweier zylindrischer, an ihren zu verbindenden Enden kuppelförmig abgerundeter Hochspannungsleiter bekannt.

Eine solche Leiterverbindung kann auch dazu dienen, bei einer dreipolig gekapselten Schaltanlage ein erstes Sammelschienenleitertriplett mit einem zweiten Triplett zu verbinden, dessen Phasenlage geometrisch gegenüber derjenigen der ersten verdreht ist.

Der Erfindung liegt die Aufgabe zugrunde, eine Leiterverbindung der eingangs genannten Art so zu gestalten, daß die Verbindungsstelle ein dielektrisch möglichst gutes Verhalten zeigt, beispielsweise dadurch, daß vorspringende Ecken und Kanten vermieden werden.

Die Aufgabe wird erfindungsgemäß dadurch gelöst, daß jedes der Leiterendstücke wenigstens in dem Bereich der kuppelförmigen Abrundung an der dem jeweils anderen Leiterendstück zugewandten Seite eine teilzylindrische Ausnehmung zur Aufnahme der zylindrischen Außenkontur des jeweils anderen Leiterendstückes aufweist.

Um eine dielektrisch möglichst günstige Gesamtanordnung der Leiterendstücke zu erreichen, werden diese so angeordnet, daß die fortgesetzt gedachten Außenkonturen der Leiterendstücke einander durchdringen. Auf diese Weise schirmen die Abrundungen des einen Leiterendstückes jeweils das andere Leiterendstück ab. Die Schwierigkeit bei dieser Konstruktion liegt darin, die Trennfuge zwischen den beiden zu verbindenden Leiterendstücken so zu positionieren, daß ein möglichst geringer Bearbeitungsaufwand bei der Bearbeitung beider Leiterendstücke entsteht.

Würde beispielsweise bei einem der Leiterendstücke lediglich die zylindrische Mantelfläche abgeflacht, so müßte auch das andere Leiterendstück in dem entsprechenden Bereich abgeflacht werden.

Es würde jedoch dabei das Problem entstehen, daß bei dem zweiten Leiterendstück in dem Bereich der kuppelförmigen Abrundung des ersten Leiterendstückes eine nicht abgeschirmte Kante entstehen würde, die nur dadurch vermieden werden könnte, daß eine komplizierte Hinterschneidung vorgesehen würde.

Außerdem ergibt sich bei der erfindungsgemäßen Konstruktion lediglich eine einzige Trennfuge im Strompfad, was zu geringen Verlusten und hoher Funktionssicherheit führt.

Die erfindungsgemäße Gestaltung der Leiterenden führt hingegen dazu, daß beide Leiterendstücke lediglich einfache Ausfräsungen ohne Hinterschneidungen aufweisen, wobei die Ausfräsungen lediglich teilzylindrische Formen und eventuell plane Bereiche aufweisen. Auf diese Weise ist eine einfache Bearbeitung in wenigen Arbeitsgängen mit einer computergesteuerten Fräsmaschine bei einfacher Programmierung möglich. Hierdurch ergibt sich eine beträchtliche Kosteneinsparung gegenüber anderen Varianten.

Die Erfindung kann außerdem vorteilhaft dadurch ausgestaltet werden, daß jedes Leiterendstück in einem an die der kuppelförmigen Rundung des Leiterendstückes abgewandten Seite der teilzylindrischen Ausnehmung anschließenden Bereich eine plane Fläche aufweist und daß die planen Flächen aneinander anliegen.

Die planen Flächen können zur Ausrichtung der beiden Leiterendstücke gegeneinander oder zur Ausrichtung jedes einzelnen Leiterendstückes bei der Bearbeitung dienen.

Durch die aneinander anliegenden planen Fächen der Leiterendstücke wird eine gute Kontaktgabe erzielt.

Eine weitere vorteilhafte Ausgestaltung der Erfindung sieht vor, daß im Bereich der planen Flächen diese durchsetzende Befestigungsmittel vorgesehen sind.

Als Befestigungsmittel können beispielsweise Zapfen zur Positionierung der beiden Leiterendstücke relativ zueinander sowie Schrauben zur Befestigung vorgesehen sein. Wenigstens eines der Leiterendstücke kann zu diesem Zweck mit einer das Leiterendstück durchsetzenden Bohrung versehen sein, die an der dem anderen Leiterende entgegengesetzten Seite des Leiterendstückes angesenkt ist, so daß eine Schraube ohne Herabsetzung der dielektrischen Festigkeit der Gesamtanordnung als Befestigungsmittel vorgesehen werden kann.

Im folgenden wird die Erfindung anhand eines Ausführungsbeispiels in einer Zeichnung gezeigt und anschließend beschrieben.

Dabei zeigt
Figur 1 in perspektivischer Ansicht die beiden Leiterenden in einer Stellung vor dem Zusammenbau,
Figur 2 zwei dreipolig gekapselte Sammelschienenleitersysteme, die mittels einer erfindungsgemäßen Leiterverbindung aneinander angekoppelt sind,
Figur 3 schematisch teilweise die Anordnung aus Figur 2 in einem Querschnitt.

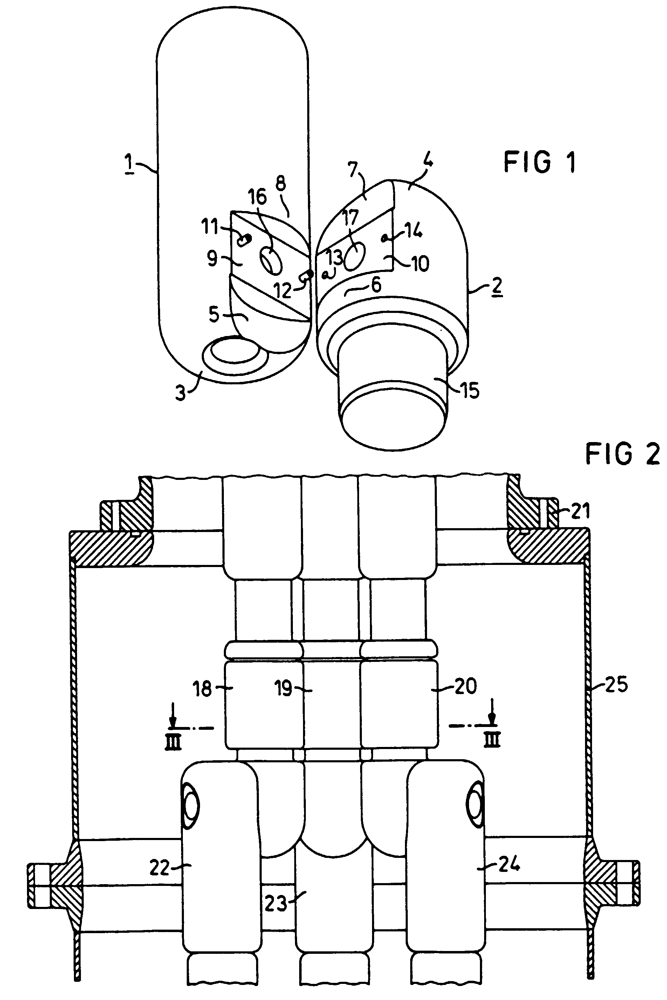

In der Figur 1 sind ein erstes Leiterendstück 1 und ein zweites Leiterendstück 2 dargestellt, die jeweils eine kuppelförmige Abrundung 3, 4 aufweisen. Die beiden Leiterendstücke 1, 2 sind in einer Position vor dem Zusammensetzen dargestellt. Das erste Leiterendstück 1 weist eine teilzylindrische Ausnehmung 5 auf, in die die zylindrische Außenkontur 6 des zweiten Leiterendstückes 2 beim Zusammensetzen der Leiterverbindung eingreift.

Das zweite Leiterendstück 2 weist eine teilzylindrische Ausnehmung 7 auf, in die die zylindrische Außenkontur 8 des ersten Leiterendstückes 1 beim Zusammensetzen der Leiterverbindung eingreift. Die teilzylindrischen Ausnehmungen 5, 7 können mittels einer Fräse auf einfache Weise in die Leiterenden 1, 2 eingebracht werden.

Außerdem weist das erste Leiterendstück 1 eine plane Fläche 9 auf, die nach dem Zusammensetzen der Leiterverbindung an der planen Fläche 10 des zweiten Leiterendstückes 2 anliegt.

Die planen Flächen 9, 10 werden von Stiften 11, 12 durchsetzt, die in Bohrungen 13, 14 des zweiten Leiterendstückes 2 eingreifen und die Leiterendstücke 1, 2 in bezug aufeinander positionieren.

Bei dem zweiten Leiterendstück 2 ist ein Steckbolzen 15 dargestellt, auf den eine Fortsetzung des Leiterendstückes 2 in Form eines zylindrischen Leiters aufgesteckt wird.

In den planen Flächen 9, 10 sind weitere Ausnehmungen 16, 17 für eine Verbindungsschraube vorgesehen, die nicht dargestellt ist.

In der Figur 2 sind drei Leiterverbindungen dargestellt, wobei jeweils die ersten Leiterendstücke 18, 19, 20 zu drei Sammelschienenleitern gehören, die in einem ersten Kapselungsgehäuse in einem festgelegten Abstand zueinander verlaufen. Die zweiten Leiterendstücke 22, 23, 24 sind innerhalb eines zweiten Kapselungsgehauses 25 mit einem Abstand zueinander angeordnet, der größer ist als der Abstand der ersten Leiterendstücke zueinander.

Durch die Leiterverbindungen wird eine Kröpfung der Leiter erreicht, so daß ein Übergang von einem ersten Leiterabstand zu einem zweiten Leiterabstand konstruktiv einfach verwirklicht ist.

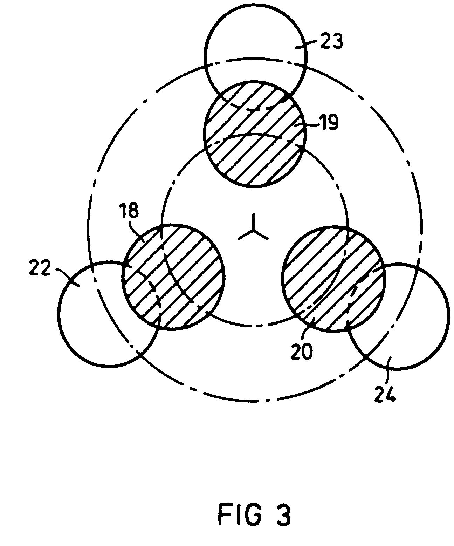

Figur 3 zeigt der Übersichtlichkeit halber eine Darstellung der Leiterendstücke aus Figur 2 in einem Querschnitt.

## Patentansprüche

1. Leiterverbindung für die Endstücke (1,2) zweier zylindrischer, an ihren zu verbindenden Enden kuppelförmig abgerundeter Hochspannungsleiter, insbesondere Sammelschienenleiter einer gekapselten Hochspannungsschaltanlage, die radial gegeneinander versetzt sind und die in axialer Richtung überlappen,
**dadurch gekennzeichnet,**
daß jedes der Leiterendstücke wenigstens in dem Bereich der kuppelförmigen Rundung an der dem jeweils anderen Leiterendstück zugewandten Seite eine teilzylindrische Ausnehmung (5, 7) zur Aufnahme der zylindrischen Außenkontur (6, 8) des jeweils anderen Leiterendstückes (1, 2) aufweist.

2. Leiteranschluß nach Anspruch 1,
**dadurch gekennzeichnet,**
daß jedes Leiterendstück (1, 2) in einem an die der kuppelförmigen Rundung (3, 4) des Leiterendstückes (1, 2) abgewandten Seite der teilzylindrischen Ausnehmung (5, 7) anschließenden Bereich eine plane Fläche (9, 10) aufweist und daß die planen Flächen (9, 10) aneinander anliegen.

3. Leiteranschluß nach Anspruch 2,
**dadurch gekennzeichnet,**
daß im Bereich der planen Flächen (9, 10) diese durchsetzende Befestigungsmittel (11, 12) vorgesehen sind.

## Claims

1. Conductor connection for the end pieces (1, 2) of two cylindrical high-voltage conductors, which are rounded off in a dome-shaped manner at their ends which are to be connected, in particular busbar conductors of an enclosed high-voltage switchgear, which conductors are radially staggered with respect to each other and overlap in an axial direction, characterised in that each of the conductor end pieces has, at least in the area of the dome-shaped rounded-off portion on the side that faces the other respective conductor end piece, a partly cylindrical recess (5, 7) for the purpose of accommodating the cylindrical outer contour (6, 8) of the other respective conductor end piece (1, 2).

2. Conductor terminal connection according to claim 1, characterised in that each conductor end piece (1, 2) has a planar surface (9, 10) in an area adjoining the side of the partly cylindrical recess (5, 7) that is remote from the dome-shaped rounded-off portion (3, 4) of the conductor end piece (1, 2), and in that the planar surfaces (9, 10) are adjacent to each other.

3. Conductor terminal connection according to claim 2, characterised in that provided in the area of the planar surfaces (9, 10) there are means of securement (11, 12) which pass through the latter.

## Revendications

1. Connexion de conducteurs destinée aux parties d'extrémité (1, 2) de deux conducteurs haute tension cylindriques dont les extrémités à connecter sont arrondies en forme de coupole, notamment de conducteurs de barres collectrices d'une installation de distribution haute tension blindée, qui sont décalés radialement les uns par rapport aux autres et qui se chevauchent dans la direction axiale,
caractérisée par le fait que,
chacune des parties d'extrémité des conducteurs comporte, dans la zone de l'arrondi en forme de coupole du côté orienté vers l'autre partie d'extrémité de conducteur, un évidement (5, 7) partiellement cylindrique qui est destiné à recevoir le contour extérieur (6, 8) cylindrique de l'autre partie d'extrémité respective (1, 2) de conducteur.

2. Connexion de conducteurs selon la revendication 1,
caractérisée par le fait que,
chaque partie d'extrémité (1, 2) de conducteur comporte une surface plane (9, 10) dans une zone qui se raccorde à l'évidement (5, 7) partiellement cylindrique du côté éloigné de l'arrondi (3, 4) en forme de coupole de la partie d'extrémité (1, 2) de conducteur, et que les surfaces planes (9, 10) s'appliquent l'une à l'autre.

3. Connexion de conducteurs selon la revendication 2,
caractérisée par le fait que,
il est prévu dans la zone des surfaces planes (9, 10), des moyens de fixation (11, 12) qui traversent ces dernières.
